# EUROPEAN PATENT APPLICATION

(11) **EP 4 700 646 A1**
(43) Date of publication of application: **25.02.2026**
(21) Application number: 24893853.2
(22) Date of filing: 25.09.2024
(51) Int. Cl.: G06K 7/14, G06K 7/12, G06K 19/06

(54) **PERSONAL INFORMATION PROVIDING SYSTEM, PROGRAM, RECORDING MEDIUM, AND PERSONAL INFORMATION PROVIDING METHOD**

(30) Priority: 20.11.2023 JP 2023196632
(71) Applicant: Variety M-1 Inc., Yokohama-shi, Kanagawa, 231-0002 (JP)
(72) Inventor: Mitake Toshiaki, Yokohama-shi, Kanagawa 231-0002 (JP)
(74) Representative: Gulde & Partner
(86) International application number: PCT/JP2024/034064
(87) International publication number: WO 2025/109859

(57) **Abstract**

[Problem]

Provided is a personal information providing system, a program, and a recording medium that effectively avoid the provision of personal information that is not necessary for a service used by a user to a service provider.

[Solution]

A personal information providing system includes a first information terminal 10 and a second information terminal 20 different from the first information terminal 10 and provides the second information terminal 20 with personal information of a user of the first information terminal 10. The first information terminal 10 includes a presentation means 15 that presents a first information code 41 containing two or more pieces of personal information. The first information terminal 10 or the second information terminal 20 includes a setting means 15 or 25 that sets personal information permitted for provision by a user from among the two or more pieces of personal information contained in the first information code 41. The second information terminal 20 includes a display control means 25 that displays only the personal information permitted for provision among the two or more pieces of personal information contained in the first information code 41 presented by the first information terminal 10.

## Description

### TECHNICAL FIELD

The present invention relates to a personal information providing system, a program, a recording medium, and a personal information providing method.

### BACKGROUND ART

Conventionally, there has been known a system that can perform personal authentication by including personal information in an information code. For example, in Patent Documents 1 and 2, the applicant proposes a system that performs personal authentication of a user on an information terminal of an administrative organization by having the information terminal capture a user's face image and having the information terminal of the administrative organization read an information code including the user's face information displayed on a mobile terminal carried by the user.

### CITED DOCUMENTS

### PATENT LITERATURE

Patent Document 1: JP-A-2021-168047
Patent Document 2: JP-A-2022-160808

### DISCLOSURE OF THE INVENTION

### PROBLEMS TO BE SOLVED BY THE INVENTION

In recent years, awareness of information literacy has increased, and there has been a high level of interest in the handling of personal information. However, in the conventional system, when a plurality of types of personal information are included in the information code, there has been a risk of providing personal information that is not necessary for the service. For example, when a car rental service is used, a health insurance card number is not required. However, there has been a risk of providing such a number to the car rental service provider.

The present invention has an object to provide a personal information providing system, a program, a recording medium, and a personal information providing method that can effectively avoid the provision of personal information that is not necessary for a service used by a user to a service provider.

### SOLUTIONS TO THE PROBLEMS

The gist of the present invention lies in the following personal information providing systems (1) to (8).
(1) A personal information providing system including a first information terminal and a second information terminal different from the first information terminal and providing the second information terminal with personal information of a user of the first information terminal. In the personal information providing system, the first information terminal includes a presentation means that presents a first information code containing two or more pieces of personal information. The first information terminal or the second information terminal includes a setting means that sets personal information permitted for provision by a user from among two or more pieces of personal information contained in the first information code. The second information terminal includes a display control means that displays only the personal information permitted for provision among the two or more pieces of personal information contained in the first information code presented by the first information terminal.
(2) The personal information providing system according to (1) above in which the second information terminal includes the setting means and an acquiring means that acquires only the personal information permitted for provision among the two or more pieces of personal information contained in the first information code, and the display control means displays the personal information permitted for provision acquired by the acquiring means.
(3) A personal information providing system including a first information terminal and a second information terminal different from the first information terminal and providing the second information terminal with personal information of a user of the first information terminal. In the personal information providing system, the first information terminal includes a setting means that sets personal information permitted for provision by a user from among two or more pieces of personal information and a presentation means that presents the first information code containing only the personal information permitted for provision. The second information terminal includes a display control means that displays the personal information permitted for provision contained in the first information code presented by the first information terminal.
(4) A personal information providing system including a first information terminal and a second information terminal different from the first information terminal and providing the second information terminal with personal information of a user of the first information terminal. In the personal information providing system, the first information terminal includes a storage means, a service information acquiring means, and a presentation means. The storage means stores a plurality of the first information codes for respective services in association with service information indicating the services. The first information code contains only personal information necessary for each service. The service information acquiring means acquires service information of a service used by a user. The presentation means presents the first information code corresponding to the service information based on the service information acquired by the service information acquiring means. The second information terminal includes a display control means that displays the personal information contained in the first information code presented by the first information terminal.
(5) A personal information providing system including a first information terminal, a second information terminal different from the first information terminal, and a server configured to communicate with the second information terminal, and providing personal information of a user of the first information terminal from the server to the second information terminal. In the personal information providing system, the first information terminal or the second information terminal includes a transmitting means that transmits user identification information to identify a user and service information indicating a service used by a user to the server. The server includes a storage means, an acquiring means, and a providing means. The storage means stores personal information necessary for a service used by a user for each piece of the user identification information and for each piece of the service information. The acquiring means acquires the user identification information and the service information from the first information terminal or the second information terminal. The providing means provides the second information terminal with the personal information necessary for a service used by a user based on the user identification information and the service information.
(6) The personal information providing system according to (5) above in which the first information terminal includes a presentation means that presents a second information code containing the user identification information and the service information, and the second information terminal includes an acquiring means and the transmitting means. The acquiring means acquires the user identification information and the service information from the second information code presented by the first information terminal. The transmitting means transmits the user identification information and the user identification information acquired by the acquiring means to the server.
(7) The personal information providing system according to (5) above in which the first information terminal includes a presentation means, and the second information terminal includes a personal information acquiring means. The presentation means presents a first information code containing user's personal information when online communication is impossible and presents a second information code containing user identification information to identify a user and service information indicating a service used by a user when online communication is possible. The personal information acquiring means acquires the personal information from the first information code when online communication is impossible and transmits the user identification information and the service information contained in the second information code to the server and acquires personal information according to the user identification information and the service information from the server when online communication is possible.
(8) The personal information providing system according to any of (5) to (7) above in which personal information provided by the server is information whose information volume is greater than an information storage volume of the first information code.
   The gist of the present invention lies in the following programs (9) to (12).
(9) A program executed by a second information terminal in a personal information providing system. The personal information providing system includes a first information terminal and the second information terminal different from the first information terminal and provides the second information terminal with personal information of a user of the first information terminal. The program causes the second information terminal to execute a function to read the first information code when the first information terminal presents a first information code containing the user's personal information, a function to set personal information permitted for provision by a user from among two or more pieces of personal information contained in the first information code, and a function to display only the personal information permitted for provision among the two or more pieces of personal information.
(10) A program executed by a first information terminal in a personal information providing system. The personal information providing system includes the first information terminal and a second information terminal different from the first information terminal and provides the second information terminal with personal information of a user of the first information terminal. The program causes the first information terminal to execute a function to set personal information permitted for provision by a user from among two or more pieces of personal information and a function to present a first information code containing only the personal information permitted for provision.
(11) A program executed by a first information terminal in a personal information providing system. The personal information providing system includes the first information terminal and a second information terminal different from the first information terminal and provides the second information terminal with personal information of a user of the first information terminal. The program causes the first information terminal to execute a function to store a plurality of first information codes for respective services in association with service information indicating the services, a function to acquire service information of a service used by a user, and a function to present the first information code corresponding to the service information based on the acquired service information. The first information code contains only personal information necessary for each service.
(12) A program executed by a server in a personal information providing system. The personal information providing system includes a first information terminal, a second information terminal different from the first information terminal, and a server configured to communicate with the second information terminal, and provides personal information of a user of the first information terminal from the server to the second information terminal. The program causes the server to realize a function to store personal information necessary for a service used by a user for each piece of user identification information to identify a user and for each piece of service information indicating a service used by a user, a function to receive the user identification information and the service information from the first information terminal or the second information terminal, and a function to provide the second information terminal with the personal information necessary for a service used by a user based on the user identification information and the service information.
   Furthermore, the gist of the present invention lies in the following personal information providing method (13).
(13) A personal information providing method in a personal information providing system. The personal information providing system includes a first information terminal and a second information terminal different from the first information terminal and provides the second information terminal with personal information of a user of the first information terminal. In the personal information providing method, the first information terminal presents a first information code containing personal information. The first information terminal or the second information terminal sets personal information permitted for provision by a user from among a plurality of pieces of personal information contained in the first information code. The second information terminal reads the first information code presented by the first information terminal and displays only the personal information permitted for provision.
   From another perspective, the gist of the present invention lies in the following personal information providing system (14).
(14) A personal information providing system including a first information terminal and a second information terminal different from the first information terminal and providing the second information terminal with personal information of a user of the first information terminal. In the personal information providing system, the first information terminal includes a setting means that sets a plurality of pieces of personal information permitted for provision by a user from among two or more pieces of personal information and a presentation means that presents only a single first information code containing the plurality of pieces of personal information permitted for provision without containing personal information unpermitted for provision. The first information code has information cells with three or more colors. The second information terminal includes a reading means that captures and reads the first information code presented by the first information terminal and a display control means that displays the plurality of pieces of personal information permitted for provision contained in the first information code read by the reading means.
   The gist of the present invention also lies in the following program (15).
(15) A program executed by a first information terminal in a personal information providing system. The personal information providing system includes the first information terminal and a second information terminal different from the first information terminal and provides the second information terminal with personal information of a user of the first information terminal. The program causes the first information terminal to execute a setting function to set a plurality of pieces of personal information permitted for provision by a user from among two or more pieces of personal information and a function to present only a single first information code containing the plurality of pieces of personal information permitted for provision without containing personal information unpermitted for provision. The first information code has information cells with three or more colors.
   Furthermore, the gist of the present invention lies in the following recording medium (16).
(16) A computer-readable recording medium that records the program according to (15) above.
   Additionally, the gist of the present invention lies in the following personal information providing method (17).
(17) A personal information providing method in a personal information providing system including a first information terminal and a second information terminal different from the first information terminal. The personal information providing system provides the second information terminal with personal information of a user of the first information terminal. The personal information providing method includes: causing the first information terminal to present only a single first information code when a user sets a plurality of pieces of personal information permitted for provision, the first information code containing the plurality of pieces of personal information permitted for provision without containing personal information unpermitted for provision, the first information code having information cells with three or more colors; and causing the second information terminal to capture and read the first information code presented by the first information terminal and to display the plurality of pieces of personal information permitted for provision contained in the read first information code.
   From further another perspective, the gist of the present invention lies in the following personal information providing system (18) to (21)."
(18) A personal information providing system comprising a first information terminal owned by a user and a second information terminal owned by a service provider. The personal information providing system provides the second information terminal with personal information of a user of the first information terminal. The first information terminal includes: a storage means that stores a first information code containing a plurality of pieces of personal information of the user; and a presentation means that presents an image of the single first information code. The first information code has information cells with three or more colors. The second information terminal includes: a setting means that displays a screen for the user to set personal information permitted for provision and causes the user to set the personal information permitted for provision; and a personal information acquiring means that reads an image of the single first information code presented by the first information terminal and acquires the personal information permitted by the setting means among the plurality of pieces of personal information contained in the single first information code.
(19) A personal information providing system includes a first information terminal; a second information terminal different from the first information terminal; and a server configured to communicate with the second information terminal. The personal information providing system provides personal information of a user of the first information terminal from the server to the second information terminal. The second information terminal includes a transmitting means that transmits user identification information to identify a user to the server. The server includes: a storage means that stores user's personal information for each piece of the user identification information; an acquiring means that acquires the user identification information from the second information terminal; and a providing means that provides the second information terminal with the user's personal information based on the user identification information. The first information terminal includes a presentation means that presents a first information code containing user's personal information when online communication is impossible and presents a second information code containing user identification information to identify a user when online communication is possible. The second information terminal includes a personal information acquiring means that acquires user's personal information from the first information code when online communication is impossible and transmits the user identification information contained in the second information code to the server and acquires personal information according to the user identification information from the server when online communication is possible.
(20) The personal information providing system according to (19) above in which the first information terminal includes a presentation means that presents a second information code containing the user identification information. The second information terminal includes: an acquiring means that acquires the user identification information from the second information code presented by the first information terminal; and the transmitting means. The transmitting means may be configured to transmit the user identification information acquired by the acquiring means to the server.
(21) The personal information providing system according to (19) or (20) above in which personal information provided by the server may be configured to be information whose information volume is greater than an information storage volume of the first information code.
   The gist of the present invention lies in the following second information terminals (22) to (23).
(22) A second information terminal acquires personal information of a user of a first information terminal. The first information terminal includes: a storage means that stores a first information code containing a plurality of pieces of personal information of the user; and a presentation means that presents an image of the single first information code. The first information code has information cells with three or more colors. The second information terminal includes: a setting means that displays a screen for the user to set personal information permitted for provision and causes the user to set the personal information permitted for provision; and a personal information acquiring means that reads an image of the single first information code presented by the first information terminal and acquires the personal information permitted by the setting means among the plurality of pieces of personal information contained in the single first information code.
(23) A second information terminal is used in a personal information providing system. The personal information providing system includes a first information terminal, the second information terminal different from the first information terminal, and a server configured to communicate with the second information terminal. The personal information providing system provides personal information of a user of the first information terminal from the server to the second information terminal. The first information terminal presents a first information code containing user's personal information when online communication is impossible and presents a second information code containing user identification information to identify a user when online communication is possible. The second information terminal acquires user's personal information from the first information code when online communication is impossible and transmits the user identification information contained in the second information code to the server and acquires user's personal information according to the user identification information from the server when online communication is possible.
   The gist of the present invention lies in the following server (24).
(24) A server is used in a personal information providing system. The personal information providing system includes a first information terminal, a second information terminal different from the first information terminal, and a server configured to be able to communicate with the second information terminal. The first information terminal includes a presentation means that presents a first information code containing user's personal information when online communication is impossible and presents a second information code containing user identification information to identify a user when online communication is possible. The second information terminal includes a transmitting means that transmits user identification information to identify a user to the server and a personal information acquiring means that acquires user's personal information from the first information code when online communication is impossible and transmits the user identification information contained in the second information code to the server and acquires personal information according to the user identification information from the server when online communication is possible. The server includes: a storage means that stores the user's personal information for each piece of the user identification information; an acquiring means that acquires the user identification information from the second information terminal; and a providing means that provides the second information terminal with the user's personal information based on the user identification information.
   In addition, the gist of the present invention lies in the following programs (25) to (27).
(25) A program is executed by a first information terminal in a personal information providing system. The personal information providing system includes the first information terminal, a second information terminal different from the first information terminal, and a server configured to communicate with the second information terminal. The personal information providing system provides personal information of a user of the first information terminal from the server to the second information terminal. The program causes the first information terminal to execute a function to present a first information code containing user's personal information when online communication is impossible and to present a second information code containing user identification information to identify a user when online communication is possible.
(26) A program is executed by a second information terminal in a personal information providing system. The personal information providing system includes a first information terminal, the second information terminal different from the first information terminal, and a server configured to communicate with the second information terminal. The personal information providing system provides personal information of a user of the first information terminal from the server to the second information terminal. The first information terminal presents a first information code containing user's personal information when online communication is impossible and presents a second information code containing user identification information to identify a user when online communication is possible. The program causes the second information terminal to execute a function to acquire user's personal information from the first information code when online communication is impossible and to transmit the user identification information contained in the second information code to the server and acquire personal information according to the user identification information from the server when online communication is possible.
(27) A program is executed by a second information terminal in a personal information providing system. The personal information providing system includes a first information terminal owned by a user and the second information terminal owned by a service provider. The personal information providing system provides the second information terminal with personal information of a user of the first information terminal. The first information terminal includes a storage means that stores a first information code containing a plurality of pieces of personal information of the user and a presentation means that presents an image of the single first information code. The first information code has information cells with three or more colors. The program executes: a function to display a screen for the user to set personal information permitted for provision and causes the user to set the personal information permitted for provision; and a function to read an image of the single first information code presented by the first information terminal and acquire the personal information permitted by a user among the plurality of pieces of personal information contained in the single first information code.
   The gist of the present invention lies in the following computer-readable recording medium (28).
(28) A computer-readable recording medium that records the program according to any of (25) to (27).
   The gist of the present invention lies in the following personal information providing methods (29) to (30).
(29) A personal information providing method is executed by a second information terminal using a first information terminal owned by a user and the second information terminal owned by a service provider to provide the second information terminal with personal information of a user of the first information terminal. The first information terminal stores a first information code containing a plurality of pieces of personal information of the user and presents an image of the single first information code. The first information code has information cells with three or more colors. The second information terminal displays a screen for the user to set personal information permitted for provision, causes the user to set the personal information permitted for provision, and reads an image of the single first information code presented by the first information terminal, so as to acquire the personal information permitted by the user among the plurality of pieces of personal information contained in the single first information code.
(30) A personal information providing method is executed by a second information terminal using a first information terminal, the second information terminal different from the first information terminal, and a server configured to communicate with the second information terminal to provide personal information of a user of the first information terminal from the server to the second information terminal. The first information terminal presents a first information code containing user's personal information when online communication is impossible and presents a second information code containing user identification information to identify a user when online communication is possible. The server stores user's personal information for each piece of the user identification information, acquires the user identification information from the first information terminal or the second information terminal, and provides the second information terminal with the user's personal information based on the user identification information. The second information terminal acquires user's personal information from the first information code when online communication is impossible and transmits the user identification information contained in the second information code to the server and acquires personal information according to the user identification information from the server when online communication is possible.

### EFFECTS OF THE INVENTION

According to the present invention, only personal information permitted for provision by a user or only personal information necessary for a service is displayed on the second information terminal owned by a service provider. Therefore, the provision of personal information that is not necessary for the service used by the user to the service provider can be effectively avoided.

### BRIEF DESCRIPTION OF THE DRAWINGS

Fig. 1 is a configuration diagram of a personal information providing system according to a first embodiment.
Fig. 2 is a block diagram illustrating a first information terminal and a second information terminal according to the first embodiment.
Fig. 3 is a drawing illustrating an exemplary information code in the embodiment.
Fig. 4 is a drawing illustrating an exemplary setting screen for personal information permitted to be provided to the second information terminal.
Fig. 5 is a flowchart illustrating a personal information providing process according to the first embodiment.
Fig. 6 is a flowchart illustrating a personal information providing process according to a second embodiment.
Fig. 7 is a drawing illustrating an exemplary service selection screen in a third embodiment.
Fig. 8 is a flowchart illustrating a personal information registration process according to the third embodiment.
Fig. 9 is a flowchart illustrating a personal information providing process according to the third embodiment.
Fig. 10 is a configuration diagram of a personal information providing system according to a fourth embodiment.
Fig. 11 is a block diagram illustrating a first information terminal and a second information terminal according to the fourth embodiment.
Fig. 12 is a flowchart illustrating a personal information providing process according to the fourth embodiment.

### DESCRIPTION OF PREFERRED EMBODIMENTS

Embodiments of a personal information providing system according to the present invention are described based on the drawings. The present invention provides a system for a person who uses a service (hereinafter referred to as a user) to provide a service provider with personal information necessary to use a service. In the system, only personal information permitted for provision by the user or only personal information necessary for the service is provided to the service provider, and the provision of personal information that is not necessary for the service used by the user to the service provider is effectively avoided. In addition, in the embodiment, since the user can provide the service provider with necessary personal information offline, it is possible to authenticate the user and provide services using personal information even in countries where the Internet environment or personal authentication system has not been established.

### <<First Embodiment>>

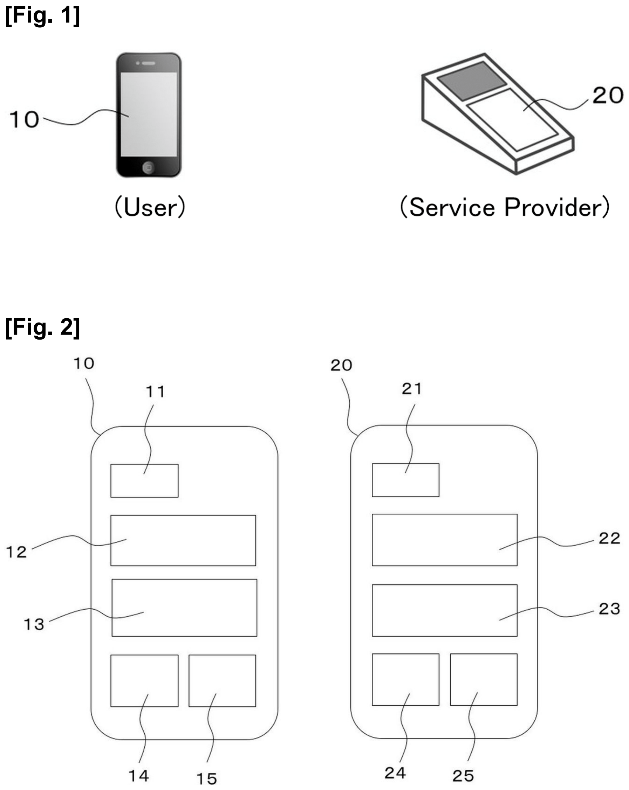

Fig. 1 is a diagram illustrating a configuration of a personal information providing system 1 according to a first embodiment. As illustrated in Fig. 1, the personal information providing system 1 according to the first embodiment includes a first information terminal 10 carried by a user and a second information terminal 20 owned by a service provider. In the embodiment, while the first information terminal 10 and the second information terminal 20 are configured not to perform wireless communication, they can be configured to enable wireless communication. In addition, in the personal information providing system 1 according to the first embodiment, the first information terminal 10 and the second information terminal 20 can be configured to enable communication with a server (not illustrated).

Fig. 2 is a block diagram illustrating the configuration of the first information terminal 10 and the second information terminal 20. The first information terminal 10 is an information terminal, such as a smartphone, tablet, or laptop computer, carried by the user. In the embodiment, a smartphone is illustrated as an example for description. As illustrated in Fig. 2, the first information terminal 10 includes a camera 11, a display 12, an input unit 13, a storage unit 14, and a calculation unit 15.

The camera 11 can acquire personal information of the user, as necessary by acquiring face information of the user by capturing a face image of the user, or by capturing a card or the like on which user's personal information is described. The display 12 displays a first information code 41 containing the user's personal information on a screen. The input unit 13 is operated by the user to register the personal information. The storage unit 14 stores the user's personal information and a program for performing a personal information providing process according to the embodiment. By executing the program stored in the storage unit 14, the calculation unit 15 realizes an information code registration function to register the first information code 41 containing two or more pieces of personal information of the user and an information code presentation function to present the registered first information code. Note that the above program can be executed on the first information terminal 10, either as an application or in the form of an app. The following describes each function of the first information terminal 10.

The information code registration function of the first information terminal 10 generates the first information code 41 containing two or more pieces of personal information of the user and stores the generated first information code 41 in the storage unit 14. Here, pieces of personal information contained in the first information code 41 are not specifically limited, but examples include textual information, such as user identification number (Individual Number), user name, address, passport number, account number, driver's license number, social insurance number, date of birth, place of birth, and original family name, and biological information, such as face image, fingerprint information, iris information, palm shape, retina, blood vessels, voice, and ear shape. In the first embodiment, the first information code 41 contains more pieces of personal information than the pieces of personal information necessary for the service used by the user.

The information code presentation function of the first information terminal 10 presents the first information code 41, which contains two or more pieces of personal information of the user, registered by the information code registration function. Specifically, the information code presentation function presents the first information code 41 containing two or more pieces of personal information of the user by acquiring the first information code 41 generated in advance from the storage unit 14 and displaying the acquired first information code 41 on the screen of the display 12.

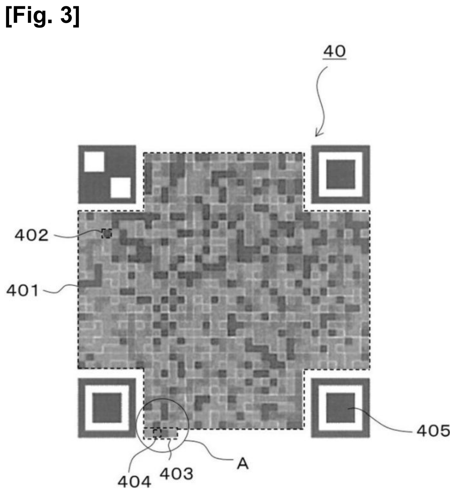

Here, the first information code 41 according to the embodiment is described. Fig. 3 is a drawing illustrating an exemplary first information code 41. In the embodiment, a configuration in which a color QR code constituted of information cells with three or more colors is used is illustrated as an example, but the present invention is not limited to this configuration. A QR code (registered trademark) constituted of white and black information cells arranged in a grid pattern or a barcode may be used.

As illustrated in Fig. 3, the first information code 41 is a square-shaped two-dimensional code having an information code area 401, a teacher code area 403, and finder symbols 405. The information code area 401 is constituted of colored information cells 402 with two or more colors, which serve as information indication units. The teacher code area 403 has teacher cells 404 with the same colors as the information cells 402 and the same number of colors as the information cells 402 so as to identify the colors of the information cells 402.

In particular, the first information code 41 has a plurality of teacher cells 404 in the teacher code area 403 to enhance the identification accuracy of the colors of the information cells 402. The color types of the teacher cells 404 match the color types of the information cells 402, and by comparing the colors of the teacher cells 404 with the colors of the information cells 402, it is possible to identify the colors of the information cells 402 with high accuracy. In particular, with a color QR code, as the color types increases, the colors are close in hue to one another. As a result, appropriate identification of the colors of the information cells 402 is sometimes difficult depending on a light environment such as illumination, a print environment of the first information code 41, a display environment of the first information code 41 on a display or the like, color fading with age of the printed first information code 41, or the like. Even in such a case, the information in the information cells 402 can be appropriately grasped by referring to the teacher cells 404 and identifying the colors of the information cells 402. For example, when the color information of an information cell 402 is a purple tint and is difficult to identify as being red-like or blue-like, if the color information is closer to red with respect to color information of the purple teacher cell 404, the color of the information cell 402 can be determined to be red. Note that the color information can be quantified as an RGB value or a CMY value.

The information code area 401 can record a certain amount of specific information composed of textual information and/or binary information by changing an indication pattern of the information cells 402 as information units. Contents of the specific information recorded in the information code area 401 are not particularly limited, but in the present embodiment, personal information including biometric information for biometric authentication can be stored. The personal information can include information, such as mobile phone number, Individual Number, passport number, account number, driver's license number, name, social insurance number, date of birth, place of birth, and original family name, in addition to the biometric information. Further, the biometric information can include face image, fingerprint information, iris information, palm shape, retina, blood vessels, voice, ear shape, and the like.

Since the information code area 401 in which the specific information is recorded is constituted of the information cells 402 with three or more colors, the information volume that can be recorded in the first information code 41 is greater than in an information code constituted of two colors, black and white. However, the data capacity that can be recorded in the first information code 41 is less than that of other recording media. Therefore, recording an entire face image with a resolution that allows for face authentication might cause a shortage of storage capacity, even with the information code area 401 constituted of the information cells 402 with four colors. An information code 40 according to the embodiment stores, as the face image for face authentication, not an entire face of the user but only a part of the face such as eyes or mouth of the user that provides feature points for the face authentication, thereby enabling the face image for the face authentication to be recorded in the first information code 41.

Next, the second information terminal 20 according to the embodiment is described. The second information terminal 20 is an information terminal, such as a smartphone, tablet, laptop computer, desktop personal computer, point-of-sale terminal, or dedicated terminal, owned by the service provider who provides services. In the embodiment, a dedicated terminal is illustrated as an example for description. As illustrated in Fig. 2, the second information terminal 20 includes a camera 21, a display 22, an input unit 23, a storage unit 24, and a calculation unit 25. The camera 21 reads the first information code 41 containing personal information displayed on the first information terminal 10. The display 22 displays the user's personal information on a screen. The input unit 23 performs an operation to set personal information that the user permits to be provided to the second information terminal 20. The storage unit 24 stores a program for providing personal information according to the embodiment. The calculation unit 25 realizes a setting function to set the personal information permitted for provision by the user by executing the program stored in the storage unit 24, a personal information acquisition function to acquire personal information from the first information code 41 presented by the first information terminal 10, and a display control function to control the display of personal information. The above program can be executed in the second information terminal 20, either as an application or in the form of an app. The following describes each function of the second information terminal 20.

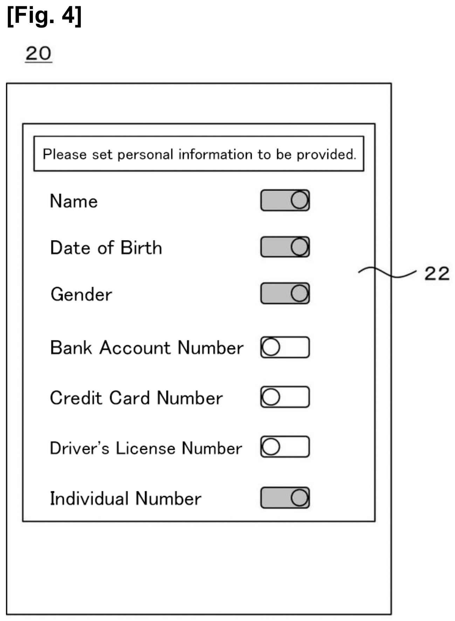

The setting function of the second information terminal 20 sets the personal information that the user permits to be provided to the second information terminal 20 (service provider). In the embodiment, as illustrated in Fig. 4, the setting function allows the user to set the personal information permitted to be provided to the second information terminal 20 (service provider) by displaying a screen for setting the personal information permitted for provision on the display 22. For example, in the example illustrated in Fig. 4, the display 22 also serves as a touch panel, which is the input unit 23. By touching the touch panel, the user can turn on and off to set the personal information permitted for provision. For example, in the example illustrated in Fig. 4, pieces of personal information such as name, date of birth, gender, and Individual Number are set as the pieces of personal information permitted for provision. Pieces of personal information such as bank account number, credit card number, and driver's license number are excluded from the personal information permitted for provision.

The personal information acquisition function of the second information terminal 20 reads the first information code 41 presented by the first information terminal 10 and acquires the personal information contained in the first information code 41. In particular, in the first embodiment, the personal information acquisition function acquires only the personal information that the user has permitted to be provided by the setting function from among the two or more pieces of personal information contained in the first information code 41.

The display control function of the second information terminal 20 controls the display of the personal information acquired by the personal information acquisition function. Specifically, in the first embodiment, since the personal information acquisition function acquires only the personal information that the user has permitted to be provided, the display control function displays all the personal information acquired by the personal information acquisition function (for example, in the example illustrated in Fig. 4, pieces of personal information of name, date of birth, gender, and Individual Number) as is on the display 22.

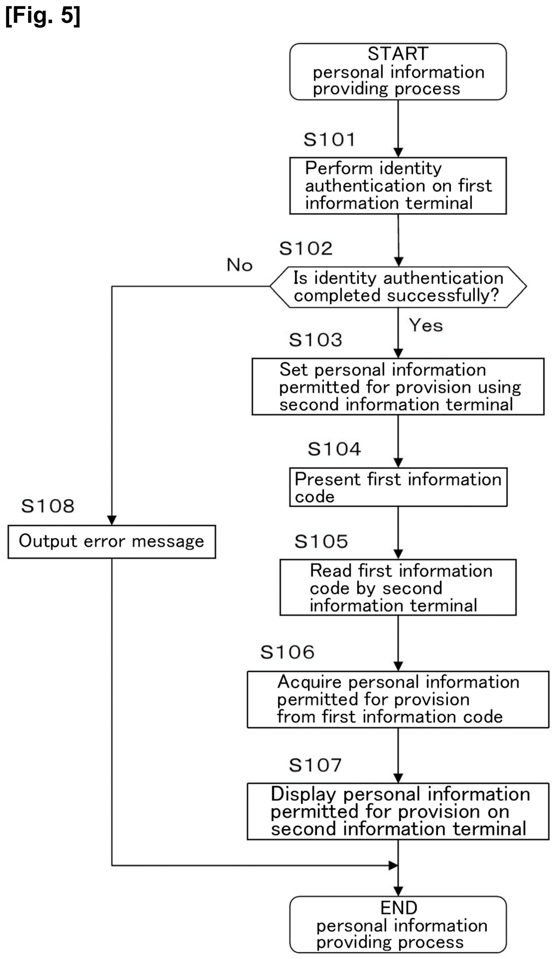

Next, a personal information providing process according to the first embodiment is described. Fig. 5 is a flowchart illustrating the personal information providing process according to the first embodiment. The personal information providing process illustrated in Fig. 5 is a process in which a user provides a service provider with personal information to use various services, such as administrative services, medical services, and car rental services (the same applies to second to fourth embodiments described later). In the following, it is assumed that the first information code 41 containing two or more pieces of personal information of the user (including pieces of personal information necessary for a service used by the user and unnecessary pieces of personal information) are stored in the storage unit 14 in advance by the information code registration function of the first information terminal 10 before the personal information providing process is performed.

In Step S101, identity authentication is performed on the first information terminal 10. For example, when as an application or an app. is launched, the first information terminal 10 first captures the user's face with the camera 11 and performs face authentication based on the captured face image. The method of face authentication is not specifically limited, and a known method can be used. In addition, face information necessary for face authentication can be captured by the camera 11 in advance and stored in the storage unit 14.

In Step S102, it is determined whether or not face authentication is completed successfully on the first information terminal 10. If face authentication is successful, the procedure proceeds to Step S103. On the other hand, if face authentication is not completed successfully, the procedure proceeds to Step S108. After an error message is displayed on the display 12 of the first information terminal 10 in Step 108,, the personal information providing process illustrated in Fig. 5 ends.

In Step S103, the setting function of the second information terminal 20 is used to set personal information permitted for provision by the user. For example, as illustrated in Fig. 4, the user can set the personal information that the user permits to be provided by operating the touch panel that also serves as the input unit 23 and touching the personal information that the user permits to be provided to the second information terminal 20 from among the two or more pieces of personal information contained in the first information code 41.

In Step S104, the information code presentation function of the first information terminal 10 is used to present the first information code 41 containing personal information. In the embodiment, the first information terminal 10 stores the first information code 41 containing two or more pieces of personal information in the storage unit 14 in advance, and the information code presentation function can acquire the first information code 41 stored in the storage unit 14 and display it on the display 12. The personal information contained in the first information code 41 includes not only the personal information permitted for provision in Step S103 but also personal information unpermitted for provision.

In Step S105, the personal information acquisition function of the second information terminal 20 is used to read the first information code 41 presented by the first information terminal 10 in Step S104. For example, the personal information acquisition function allows the second information terminal 20 to read the first information code 41 by starting the camera 21 and capturing the first information code 41 displayed on the display 12 of the first information terminal 10 by the user with the camera 21.

In Step S106, the personal information acquisition function of the second information terminal 20 is used to acquire the user's personal information from the first information code 41 read in Step S105. In particular, in the embodiment, the personal information acquisition function acquires only the personal information permitted to be provided to the second information terminal 20 from the first information code 41 based on setting information of the personal information set in Step S103. That is, the first information code 41 may contain personal information that the user has not permitted to be provided. However, the personal information acquisition function acquires only the personal information that the user has permitted to be provided from among these two or more pieces of personal information based on the setting information of the personal information set in Step S103.

In Step S107, the display control function of the second information terminal 20 is used to display the personal information acquired in Step S106 on the display 22. Here, since only the personal information permitted to be displayed by the user are acquired in Step S106, only the personal information permitted to be displayed by the user are displayed and provided to the service user in Step S107. Then, the personal information providing process illustrated in Fig. 5 ends.

As described above, the personal information providing system 1 according to the first embodiment includes the first information terminal 10 and the second information terminal 20 and provides the second information terminal 20 with personal information of a user of the first information terminal 10. In the personal information providing system 1, the first information terminal 10 presents the first information code 41 containing two or more pieces of personal information. The second information terminal 20 has a setting function to set personal information permitted for provision by the user from among the two or more pieces of personal information contained in the first information code 41 and displays only the personal information permitted for provision by the user from among the two or more pieces of personal information contained in the first information code 41 presented by the first information terminal 10. As a result, in the personal information providing system 1 according to the first embodiment, for example, when receiving an administrative service, a user sets to provide only personal information used in the administrative service, such as address, face image, and name, using the second information terminal 20. Accordingly, in the second information terminal 20, only the personal information used in the administrative service, which the user has permitted to be provided, are acquired among the pieces of personal information of the user contained in the first information code 41 presented by the first information terminal 10. The provision of personal information that are not used in the administrative service to a provider of the administrative service can be effectively avoided. In addition, in the embodiment, it is possible to authenticate a user by presenting necessary personal information or to provide a service using personal information even when it is offline. Therefore, for example, even in countries where the Internet environment or personal authentication system has not been established, the personal information providing system 1 according to the first embodiment can be used to authenticate a user or provide a service using personal information by providing the necessary personal information from the first information terminal 10 to the second information terminal 20.

### <<Second Embodiment>>

Next, the personal information providing system 1 according to a second embodiment is described. The personal information providing system 1 according to the second embodiment has a similar configuration to the first embodiment and operates similarly to the personal information providing system 1 according to the first embodiment, except as described below.

In the second embodiment, the calculation unit 15 of the first information terminal 10 has a setting function to set personal information permitted for provision by a user in the first information terminal 10, in addition to the functions of the first embodiment. Specifically, as illustrated in Fig. 4, the setting function displays a screen to set the personal information that the user permits to be provided to the second information terminal 20 on the display 12 of the first information terminal 10. This allows the user to operate the touch panel that serves as both the display 12 and the input unit 13, and set the personal information permitted for provision by the user. The program for executing the setting function can be executed in the first information terminal 10, either as an application or in the form of an app.. On the other hand, in the second embodiment, the calculation unit 25 of the second information terminal 20 can be configured not to have a setting function to set personal information permitted for provision by a user among the functions of the first embodiment.

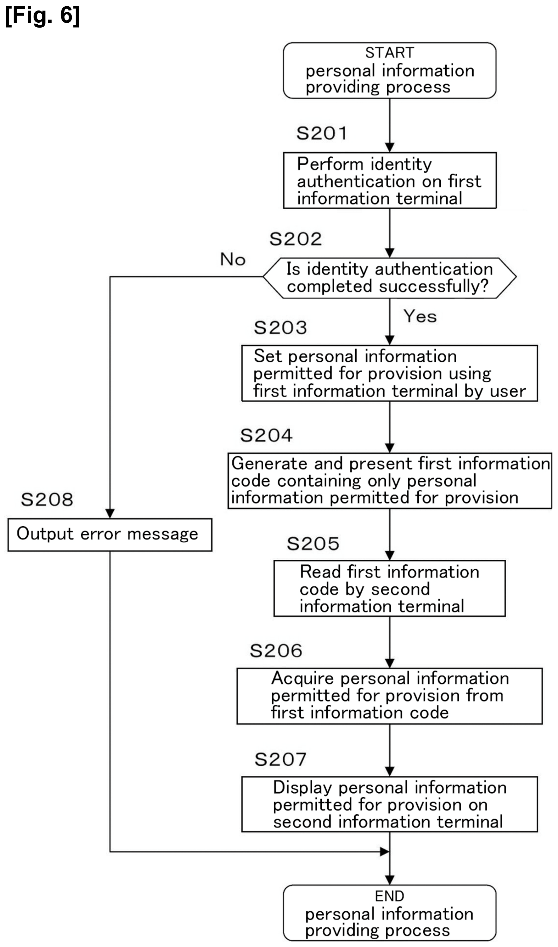

Next, a personal information providing process according to the second embodiment is described. Fig. 6 is a flowchart illustrating the personal information providing process according to the second embodiment. Since Steps S201, S202, and S208 are similar to Steps S101, S102, and S108 in the first embodiment, the description is omitted.

In Step S203, by operating the first information terminal 10 by the user, the setting function of the first information terminal 10 is used to set personal information permitted to be provided to the second information terminal 20. Specifically, as illustrated in Fig. 4, the setting function first displays a setting screen for setting personal information permitted to be provided to the second information terminal 20 on the display 12 of the first information terminal 10. The user can set the personal information permitted for provision by the user among two or more pieces of personal information displayed on the display 12 by operating the touch panel that also serves as the input unit 13. When the personal information permitted for provision by the user are selected, the setting function acquires the selected personal information as the personal information permitted to be provided to the second information terminal 20.

In Step S204, the information code presentation function of the first information terminal 10 is used to generate and present the first information code 41. Specifically, the information code presentation function generates the first information code 41 containing only the personal information permitted for provision set in Step S203 and displays the generated first information code 41 on the display 12.

In Step S205, the personal information acquisition function of the second information terminal 20 is used to read the first information code 41 presented in Step S204. Subsequently, in Step S206, the personal information acquisition function is used to acquire the user's personal information from the first information code 41 read in Step S205. Here, in the second embodiment, since the first information code 41 contains only the personal information permitted for provision by the user as the user's personal information, the personal information acquisition function can acquire all the personal information contained in the first information code 41 as the personal information permitted for provision by the user. Then, in Step S207, the display control function of the second information terminal 20 is used to display the personal information permitted for provision by the user acquired in Step S206 on the display 22. As described above, in the second embodiment, the first information code 41 contains only the personal information permitted for provision by the user. Therefore, in Step S207, only the personal information permitted for provision by the user is provided to the service provider.

As described above, in the personal information providing system 1 according to the second embodiment, the first information terminal 10 is used to set the personal information permitted for provision by a user and present the first information code 41 containing only the personal information permitted for provision. Therefore, the second information terminal 20 displays all the personal information contained in the first information code presented by the first information terminal 10 as is, thereby allowing only the personal information permitted for provision by the user to be provided to the second information terminal 20 (or the service provider). In particular, in the second embodiment, since the user only needs to operate the first information terminal 10, the convenience of the user can be improved.

### <<Third Embodiment>>

Next, the personal information providing system 1 according to a third embodiment is described. The personal information providing system 1 according to the third embodiment also has a similar configuration to the personal information providing system 1 according to the first embodiment and operates similarly to the personal information providing system 1 according to the first embodiment, except as described below.

In the first information terminal 10 according to the third embodiment, the storage unit 14 stores the first information codes 41 for respective services in association with service information indicating the above services. The first information code 41 contains one or two or more pieces of personal information necessary for a service provided by the second information terminal 20. For example, the storage unit 14 can be configured to store the first information code 41 containing personal information necessary for an administrative service, such as address, face image, and name, in association with administrative service information, the first information code 41 containing personal information necessary for a medical service, such as health insurance card number, in association with medical service information, and the first information code 41 containing personal information necessary for a car rental service, such as driver's license number, in association with car rental service information.

In addition, in the first information terminal 10 according to the third embodiment, the information code registration function of the calculation unit 15 generates, for each service, the first information code 41 containing one or two or more pieces of personal information used in the service and stores it in the storage unit 14 in association with the service information indicating the above service. For example, in the above example, the information code registration function can generate the first information code 41 containing personal information necessary for the administrative service, such as address, face image, and name, and store it in the storage unit 14 in association with the administrative service information. Also, the information code registration function can generate the first information code 41 containing personal information necessary for the medical service, such as health insurance card number, and store it in the storage unit 14 in association with the medical service information. Furthermore, the information code registration function can generate the first information code 41 containing personal information necessary for the car rental service, such as driver's license number, and store it in the storage unit 14 in association with the car rental service information.

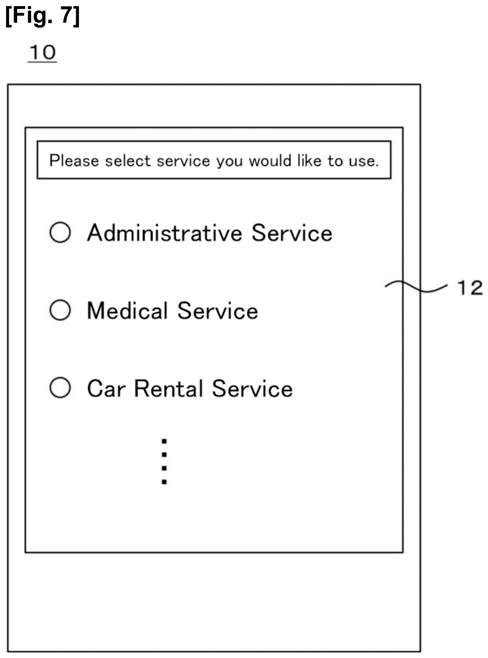

Additionally, in the third embodiment, the information code presentation function of the calculation unit 15 can present the first information code 41 corresponding to the service used by the user. For example, as illustrated in Fig. 7, the information code presentation function displays a screen on which the user selects the service they want to use on the display 12. The user can select the service that the user wants to use from among a plurality of services displayed on the display 12 by operating the touch panel that also serves as the input unit 13. When the user selects the service, the information code presentation function displays the first information code 41 corresponding to the selected service from among the plurality of first information codes 41 stored in the storage unit 14 on the display 12. Fig. 7 is a drawing illustrating an exemplary service selection screen in the third embodiment.

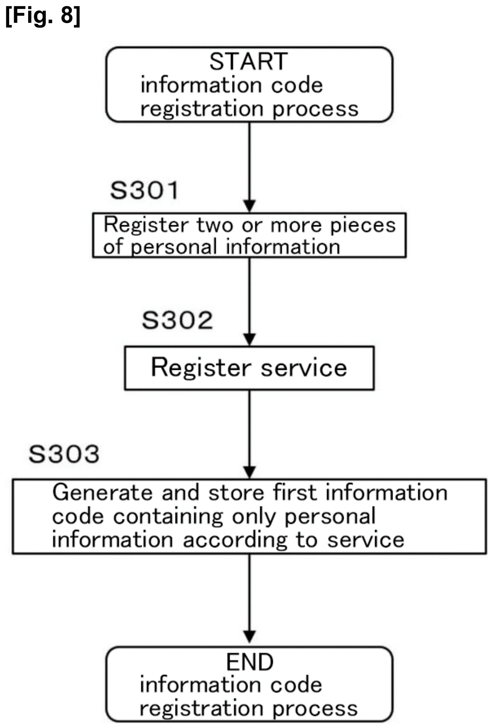

Next, an information code registration process according to the third embodiment is described with reference to Fig. 8. Fig. 8 is a flowchart illustrating the information code registration process according to the third embodiment. The information code registration process according to the embodiment is performed by the user using the first information terminal 10.

In Step S301, the information code registration function of the first information terminal 10 is used to register two or more pieces of personal information. For example, the information code registration function can be configured to display a screen for the user to register personal information on the display 12, and to have the user enter personal information through the input unit 13. The registered personal information is stored in the storage unit 14 of the first information terminal 10.

In Step S302, the information code registration function is used to register services used by the user. For example, the information code registration function can be configured to display a screen for the user to register services used by the user on the display 12, and to have the user enter the services used by the user. The information on the registered services used is stored in the storage unit 14 of the first information terminal 10.

In Step S303, the information code registration function is used to generate, for each service registered in Step S302, the first information code 41 containing only the personal information used in the service among the two or more pieces of personal information registered in Step S301, and store it in the storage unit 14. For example, the information code registration function first displays a screen on the display 12 to select a service for which the first information code 41 is generated among the services registered in Step S302, and causes the user to select the service for which the first information code 41 is generated. Next, the information code registration function displays a screen on the display 12 to select personal information used in the service selected by the user among the pieces of personal information registered in Step S301, and causes the user to select the personal information used in the service selected by the user. This allows the information code registration function to grasp, for each service, the personal information used in the service, generate the first information code containing only the personal information used in the service, and store it in the storage unit 14.

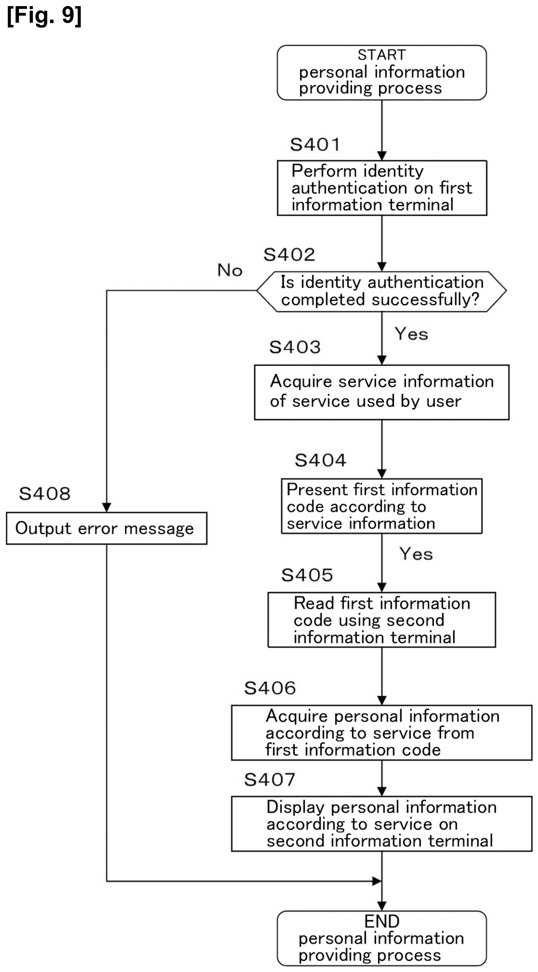

Next, a personal information providing process according to the third embodiment is described. Fig. 9 is a flowchart illustrating the personal information registration process according to the third embodiment. Since Steps S401, S402, and S408 are similar to Steps S101, S102, and S108 in the first embodiment, the description is omitted.

In Step S403, the information code presentation function of the first information terminal 10 is used to acquire the service information of a service used by the user. Specifically, as illustrated in Fig. 7, the information code presentation function can display a screen to select a service used by the user on the display 12. The user can select the service used by the user among a plurality of services displayed on the display 12 by operating the touch panel that also serves as the input unit 13. When the user selects the service, the information code presentation function acquires the service information indicating the selected service.

In Step S404, the information code presentation function is used to present the first information code 41 corresponding to the service information acquired in Step S403. In a fourth embodiment, the storage unit 14 stores in advance the first information code 41 containing only the personal information used in the service in association with the service information. Therefore, the information code presentation function acquires the first information code 41 corresponding to the service information acquired in Step S404 from the storage unit 14 and displays it on the display 12.

Then, in Step S405, the personal information acquisition function of the second information terminal 20 is used to read the first information code 41 presented by the first information terminal 10. In Step S406, the personal information acquisition function is used to acquire the personal information containing the read first information code 41. Then, in Step S407, the display control function of the second information terminal 20 is used to display the personal information acquired in Step S406 on the display 22. Thus, in the third embodiment, the first information code 41 read by the second information terminal 20 is an information code containing the personal information necessary for the service used by the user. Therefore, only the personal information necessary for the service used by the user is provided to the second information terminal 20 (service provider).

As described above, in the third embodiment, the first information terminal 10 stores a plurality of first information codes 41 for respective services in association with the service information indicating the services. The first information code 41 contains only the personal information necessary for each service. The first information terminal 10 acquires service information of the service used by the user and presents the first information code 41 corresponding to the service information based on the service information. The second information terminal 20 then displays the personal information contained in the first information code 41 presented by the first information terminal 10. This allows the personal information providing system 1 according to the third embodiment to provide the second information terminal 20 (or the service provider) with only the personal information necessary for the service used by the user.

### <<Fourth Embodiment>>

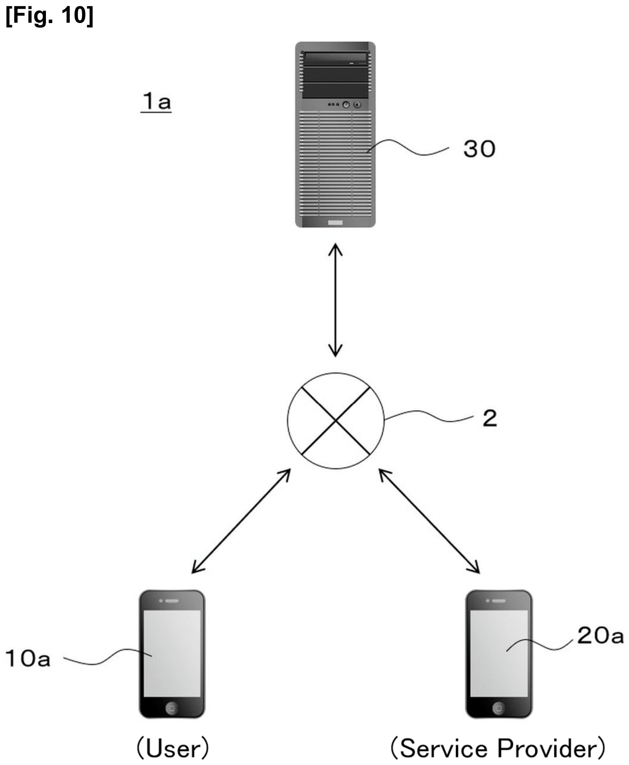

Next, the fourth embodiment of the present invention is described. Fig. 10 is a configuration diagram illustrating a personal information providing system 1a according to the fourth embodiment. As illustrated in Fig. 10, in the fourth embodiment, in addition to a first information terminal 10a and a second information terminal 20a, a server 30 configured to communicate with the first information terminal 10a and the second information terminal 20a is provided. As illustrated in Fig. 10, the first information terminal 10a and the second information terminal 20a can exchange information with one another through wireless communication or wired communication between the first information terminal 10a, the second information terminal 20a, and the server 30 in an environment where network communication using an Internet connection 2 or the like is available.

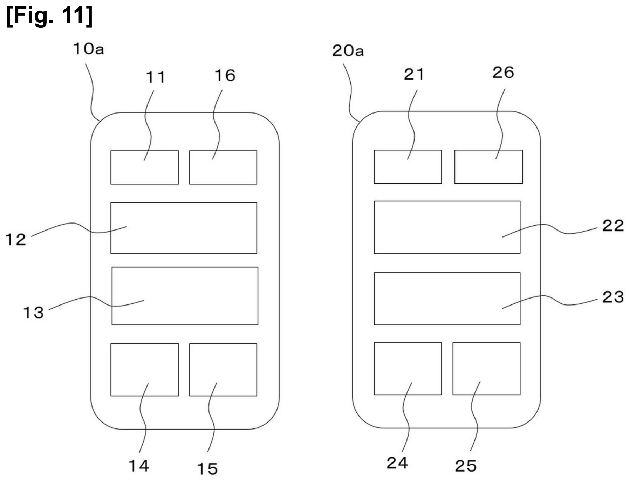

Fig. 11 is a configuration diagram illustrating the first information terminal 10a and the second information terminal 20a according to the fourth embodiment. The first information terminal 10a according to the fourth embodiment is an information terminal, such as a smartphone, tablet, or laptop computer, similarly to the first embodiment. In the embodiment, a smartphone is also illustrated as an example for description. As illustrated in Fig. 11, the first information terminal 10a includes a communication unit 16, which enables network communication through the Internet connection 2. In addition, in the first information terminal 10a according to the fourth embodiment, the information code presentation function of the calculation unit 15 presents a different information code depending on whether or not network communication is possible through the communication unit 16. Specifically, the information code presentation function presents a second information code 42 containing identification information to identify a user and service information indicating a service used by the user when network communication is possible, and it is online. On the other hand, the information code presentation function presents the first information code 41 containing the user's personal information when network communication is not possible, and it is offline.

In addition, in the fourth embodiment, the second information terminal 20a also includes a communication unit 26, similarly to the first information terminal 10a. In the fourth embodiment, the second information terminal 20a is an information terminal, such as a smartphone, tablet, laptop computer, desktop personal computer, point-of-sale terminal, or dedicated terminal, owned by the service provider, similarly to the first embodiment. In the embodiment, a smartphone is illustrated as an example for description. By communicating with the server 30 in an environment where network communication is available, the communication unit 26 can receive the user's personal information stored in the server 30 from the server 30 through the Internet connection 2. In addition, in the second information terminal 20a according to the fourth embodiment, the personal information acquisition function of the calculation unit 25 acquires personal information from the first information code 41 presented by the first information terminal 10a when it is offline. On the other hand, when it is online, by acquiring the user identification information and service information from the second information code 42 presented by the first information terminal 10a and transmitting the acquired user identification information and service information to the server 30, the personal information acquisition function of the calculation unit 25 acquires the personal information corresponding to the transmitted user identification information and service information from the server 30.

The server 30 is installed on the Internet connection 2 and can communicate with at least the second information terminal 20a. The server 30 has a database (not illustrated), and in this database, the personal information of each user necessary for each service is stored for each service and for each user. That is, the user's personal information is stored with the user identification information and the service information as the keys. By acquiring the user identification information and the service information from the second information terminal 20a, the server 30 can provide the second information terminal 20a with only the personal information necessary for the service used by the user based on the acquired user identification information and service information.

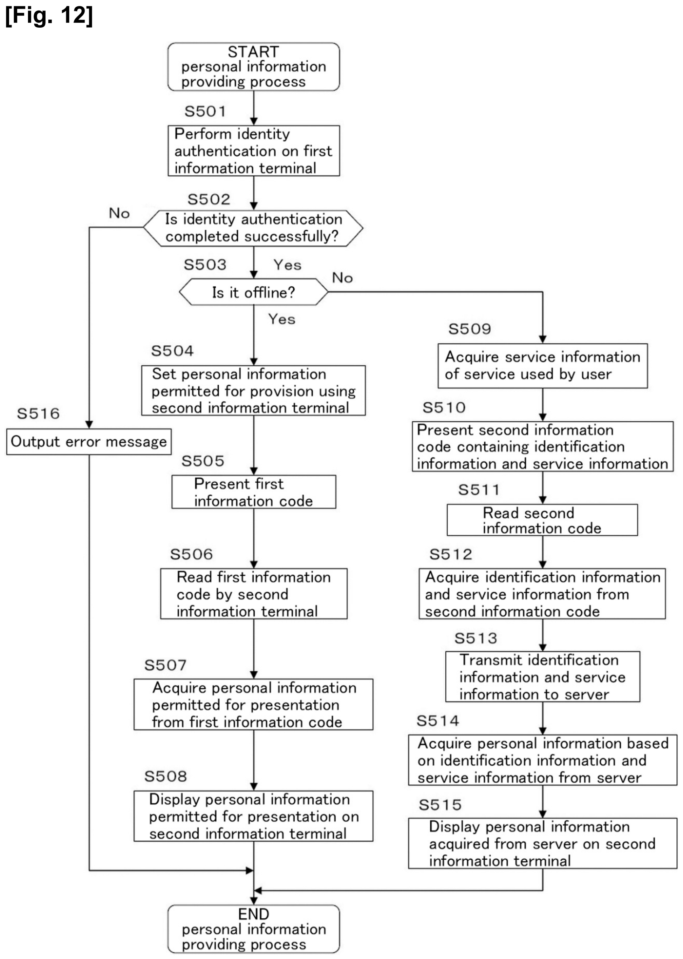

Next, a personal information providing process according to the fourth embodiment is described. Fig. 12 is a flowchart illustrating the personal information providing process according to the fourth embodiment. Since Steps S501, S502, and S508 are similar to Steps S101, S102, and S108 in the first embodiment, the description is omitted. In the following, it is assumed that the first information code 41 containing two or more pieces of personal information of the user (including personal information necessary for a service used by the user and unnecessary personal information) and the identification information to identify the user are stored in the storage unit 14 in advance by the information code registration function of the first information terminal 10 before the personal information providing process is performed.

In Step S503, the information code presentation function of the first information terminal 10a is used to determine whether or not it is offline. Note that a known method can be used to determine whether or not it is offline. If it is offline, the procedure proceeds to Step S504. If it is online, the procedure proceeds to Step S509.

In Steps S504 to S508, since it is offline, personal information is provided to the second information terminal 20a in the same method as in the first embodiment. That is, the user sets personal information permitted for provision by the user using the second information terminal 20a (Step S504), and presents the first information code 41 containing two or more pieces of personal information of the user using the first information terminal 10a (Step S505). As a result, in the second information terminal 20a, the first information code 41 is read (Step S506), only the personal information permitted for provision among the pieces of personal information contained in the first information code 41 are acquired (Step S507), and only the personal information permitted for provision is/are displayed on the display 22 of the second information terminal 20a (Step S508).

On the other hand, in Steps S509 to S515, since it is online, the second information terminal 20a acquires and displays personal information from the server 30. Specifically, first, in Step S509, the information code presentation function of the first information terminal 10 is used to acquire service information indicating a service used by the user, similarly to Step S403 in Fig. 9. Then, in Step S510, the information code presentation function is used to present the second information code 42 containing the user identification information and service information. That is, the information code presentation function generates the second information code 42 containing the user identification information and service information based on the user identification information stored in the storage unit 14 and the service information acquired in Step S509, and displays it on the display 22.

Next, in Step S511, the personal information acquisition function of the second information terminal 20a is used to read the second information code 42 presented in Step S510. In Step S512, the personal information acquisition function is used to acquire the user identification information and service information from the second information code 42 read in Step S511. Then, in Step S513, the personal information acquisition function is used to transmit the user identification information and the service information acquired in Step S512 to the server 30.

In Step S514, the server 30 is used to extract the personal information of the user necessary for the service from the database based on the user identification information and the service information received from the second information terminal 20 in Step S513, and transmit them to the second information terminal 20a. This allows the personal information acquisition function of the second information terminal 20a to acquire the personal information of the user necessary for the service used by the user from the server 30. Then, in Step S515, an information display function of the second information terminal 20a is used to display the personal information acquired from the server 30 in Step S514 on the display 22. Personal information transmitted from the server 30 to the second information terminal 20a can include the same personal information as the personal information contained in the first information code 41, as well as personal information with a large amount of data that cannot be stored in the storage capacity of the first information code 41, such as an image of the entire face.

As described above, the personal information providing system 1a according to the fourth embodiment includes the first information terminal 10a, the second information terminal 20a, and the server 30. When it is offline, the user sets personal information permitted to be provided to the second information terminal 20 and presents the first information code 41 containing the personal information on the first information terminal 10a, allowing the service provider to acquire the personal information permitted for provision by the user on the second information terminal 20. In addition, when it is online, the user selects the service used by the user using the first information terminal 10 and presents the second information code 42 containing the user identification information and service information, allowing the service provider to acquire the user identification information and service information on the second information terminal 20, and to acquire only the personal information of the user necessary for the service used by the user from the server 30 based on the acquired user identification information and service information. Thus, in the fourth embodiment as well, only the user's personal information permitted for provision by the user or the user's personal information necessary for the service is provided to the service provider. Therefore, the provision of personal information irrelevant to the service can be effectively avoided. In addition, in the personal information providing system 1a according to the fourth embodiment, the user's personal information can be acquired from the server 30 when it is online. Therefore, the personal information with a large storage capacity that cannot be stored in the first information code 41 can be provided to the service provider. For example, even if the face image of the user cannot be stored in the first information code 41 due to the data capacity, when it is online, by providing the face information of the user from the server, the service provider can confirm from the face image of the user whether the user in front of the service provider is the same person as the user with the personal information.

While examples of the preferred embodiments of the present invention have been described above, the technical scope of the present invention is not limited to the description of the above embodiments. Various changes and improvements can be made to the above examples of the embodiments, and forms that have undergone such changes or improvements are also included in the technical scope of the present invention.

For example, in the first embodiment described above, the configuration is exemplified in which personal information provided to the second information terminal 20 is set in the second information terminal 20. This configuration, however, should not be construed in a limiting sense. It is also possible to be configured such that the second information terminal 20 has information about the personal information necessary for services, and only the personal information necessary for a service is automatically select out from the first information code 41 presented by the first information terminal 10. For example, the display control function of the calculation unit 15 of the second information terminal 20 can be configured to acquire only the personal information necessary to provide the service from the first information code 41 read from the first information terminal 10 by acquiring the type of personal information necessary to provide the service from the storage unit 24.

In addition, in the first embodiment described above, the configuration is exemplified in which when acquiring the user's personal information by the second information terminal 20, only the personal information that the user has permitted to be provided are displayed (Step S107) by acquiring only the personal information permitted for provision by the user (Step S106). This configuration, however, should not be construed in a limiting sense. It is also possible to be configured to acquire all the personal information contained in the first information code 41 when acquiring the user's personal information by the second information terminal 20 and to display only the personal information that the user has permitted to be provided when displaying the user's personal information.

Furthermore, in the fourth embodiment described above, the configuration is exemplified in which, when it is offline, the second information terminal 20 reads the second information code 42 from the first information terminal 10 (Step S511) and transmits the user identification information and usage scene information contained in the second information code 42 to the server 30 (Step S513). This configuration, however, should not be construed in a limiting sense. It is also possible to be configured such that, for example, by transmitting the user identification information and usage scene information to the server 30 by the first information terminal 10, the server 30 provides the second information terminal 20 with personal information, such as a face image.

In addition, in the first embodiment described above, the configuration is exemplified in which the first information terminal 10 stores the first information code 41 in the storage unit 14 in advance, and the first information code 41 stored in the storage unit 14 is displayed on the display 12. This, however, should not be construed in a limiting sense. It is also possible to be configured to generate the first information code 41 every time the first information code 41 is presented.

Additionally, in the first embodiment and the second embodiment described above, the configuration in which the user sets the personal information permitted for provision is/are exemplified. However, in addition to this configuration, it is also possible to be configured to output an error message and stop the use of a service when the user does not set all the personal information necessary to use the service as the personal information permitted for provision or to output a message to request the user to provide the personal information necessary for the service. It is also possible to be configured to change the color of the columns of the personal information necessary for the service or to make the personal information necessary for the service mandatory input items when the user sets the personal information permitted for provision, so that the user can grasp the personal information necessary to provide the service.

Furthermore, in the fourth embodiment described above, the configuration in which personal information is provided similarly to the first embodiment when it is offline is exemplified. This configuration, however, should not be construed in a limiting sense. For example, it is also possible to be configured to provide personal information similarly to the second embodiment or the third embodiment when it is offline. In addition, in the fourth embodiment described above, the configuration in which the first information terminal 10 includes the communication unit 16 is exemplified. This configuration, however, should not be construed in a limiting sense. It is also possible to be configured such that the first information terminal 10 does not have the communication unit 16.

Moreover, in the fourth embodiment described above, the configuration is exemplified in which, when it is online, the second information terminal 20 reads the second information code 42 and acquires all the personal information necessary for the service used by the user from the server 30 based on the user identification information and service information contained in the second information code 42. This configuration, however, should not be construed in a limiting sense. It is also possible to be configured such that, even when it is online, the second information terminal 20 reads the first information code 41 and acquires the user's personal information contained in the first information code 41, as well as acquires personal information with a large capacity, which cannot be contained in the first information code 41, from the server 30. In this case, the second information terminal 20 can acquire the personal information of the user from the server 30 based on an identification number and the like of the user contained in the first information code 41.

Furthermore, in addition to the embodiments described above, it is also possible to be configured to provide the user's personal information from the first information terminal 10 to the second information terminal 20 and authenticate the user (identify the user) in the second information terminal 20. As the authentication method, a known method can be used.

### DESCRIPTION OF REFERENCE SIGNS

- 1, 1a:: Personal information providing system
- 10, 10a:: First information terminal
- 11:: Camera
- 12:: Display
- 13:: Input unit
- 14:: Storage unit
- 15:: Calculation unit
- 16:: Communication unit
- 20, 20a:: Second information terminal
- 21:: Camera
- 22:: Display
- 23:: Input unit
- 24:: Storage unit
- 25:: Calculation unit
- 26:: Communication unit
- 30:: Server
- 40 to 42:: Information code
- 401:: Information code area
- 402:: Information cell
- 403:: Teacher code area
- 404:: Teacher cell
- 405:: Finder symbol
- 2:: Internet connection

## Claims

1. A personal information providing system comprising:
a first information terminal; and
a second information terminal different from the first information terminal, wherein
the personal information providing system provides the second information terminal with personal information of a user of the first information terminal, wherein
the first information terminal includes:
a setting means that sets a plurality of pieces of personal information permitted for provision by a user from among two or more pieces of personal information; and
a presentation means that presents only a single first information code containing the plurality of pieces of personal information permitted for provision without containing personal information unpermitted for provision,
the first information code has information cells with three or more colors, and
the second information terminal includes:
a reading means that captures and reads the first information code presented by the first information terminal; and
a display control means that displays the plurality of pieces of personal information permitted for provision contained in the first information code read by the reading means.

2. A program executed by a first information terminal in a personal information providing system, the personal information providing system including the first information terminal and a second information terminal different from the first information terminal, the personal information providing system providing the second information terminal with personal information of a user of the first information terminal, wherein
the program causes the first information terminal to execute:
a setting function to set a plurality of pieces of personal information permitted for provision by a user from among two or more pieces of personal information; and
a presentation function to present only a single first information code containing the plurality of pieces of personal information permitted for provision without containing personal information unpermitted for provision, wherein
the first information code has information cells with three or more colors.

3. A computer-readable recording medium that records the program according to claim 2.

4. A personal information providing method in a personal information providing system, the personal information providing system including a first information terminal and a second information terminal different from the first information terminal, the personal information providing system providing the second information terminal with personal information of a user of the first information terminal, the personal information providing method comprising:
causing the first information terminal to present only a single first information code when a user sets a plurality of pieces of personal information permitted for provision, the first information code containing the plurality of pieces of personal information permitted for provision without containing personal information unpermitted for provision,
the first information code has information cells with three or more colors; and
causing the second information terminal to capture and read the first information code presented by the first information terminal and to display the plurality of pieces of personal information permitted for provision contained in the read first information code.

5. A personal information providing system comprising:
a first information terminal owned by a user; and
a second information terminal owned by a service provider, wherein
the personal information providing system provides the second information terminal with personal information of a user of the first information terminal, wherein
the first information terminal includes:
a storage means that stores a first information code containing a plurality of pieces of personal information of the user; and
a presentation means that presents an image of the single first information code, wherein
the first information code has information cells with three or more colors; and
the second information terminal includes:
a setting means that displays a screen for the user to set personal information permitted for provision and causes the user to set the personal information permitted for provision; and
a personal information acquiring means that reads an image of the single first information code presented by the first information terminal and acquires the personal information permitted by the setting means among the plurality of pieces of personal information contained in the single first information code.

6. A personal information providing system comprising
a first information terminal;
a second information terminal different from the first information terminal; and
a server configured to communicate with the second information terminal, wherein
the personal information providing system provides personal information of a user of the first information terminal from the server to the second information terminal, and
the second information terminal includes a transmitting means that transmits user identification information to identify a user to the server, wherein
the server includes:
a storage means that stores user's personal information for each piece of the user identification information;
an acquiring means that acquires the user identification information from the second information terminal; and
a providing means that provides the second information terminal with the user's personal information based on the user identification information, wherein
the first information terminal includes a presentation means that presents a first information code containing user's personal information when online communication is impossible and presents a second information code containing user identification information to identify a user when online communication is possible, and
the second information terminal includes a personal information acquiring means that acquires user's personal information from the first information code when online communication is impossible and transmits the user identification information contained in the second information code to the server and acquires personal information according to the user identification information from the server when online communication is possible.

7. The personal information providing system according to claim 6, wherein
the first information terminal includes a presentation means that presents a second information code containing the user identification information,
the second information terminal includes:
an acquiring means that acquires the user identification information from the second information code presented by the first information terminal; and
the transmitting means, wherein
the transmitting means transmits the user identification information acquired by the acquiring means to the server.

8. The personal information providing system according to claim 6, wherein
personal information provided by the server is information whose information volume is greater than an information storage volume of the first information code.

9. A second information terminal that acquires personal information of a user of a first information terminal, wherein
the first information terminal includes:
a storage means that stores a first information code containing a plurality of pieces of personal information of the user; and
a presentation means that presents an image of the single first information code,
the first information code has information cells with three or more colors, and
the second information terminal includes:
a setting means that displays a screen for the user to set personal information permitted for provision and causes the user to set the personal information permitted for provision; and
a personal information acquiring means that reads an image of the single first information code presented by the first information terminal and acquires the personal information permitted by the setting means among the plurality of pieces of personal information contained in the single first information code.

10. A second information terminal used in a personal information providing system, the personal information providing system comprising a first information terminal, the second information terminal different from the first information terminal, and a server configured to communicate with the second information terminal, the personal information providing system providing personal information of a user of the first information terminal from the server to the second information terminal, wherein
the first information terminal presents a first information code containing user's personal information when online communication is impossible and presents a second information code containing user identification information to identify a user when online communication is possible, and
the second information terminal acquires user's personal information from the first information code when online communication is impossible and transmits the user identification information contained in the second information code to the server and acquires user's personal information according to the user identification information from the server when online communication is possible.

11. A server used in a personal information providing system, the personal information providing system comprising a first information terminal, a second information terminal different from the first information terminal, and a server configured to be able to communicate with the second information terminal, wherein
the first information terminal includes a presentation means that presents a first information code containing user's personal information when online communication is impossible and presents a second information code containing user identification information to identify a user when online communication is possible,
the second information terminal includes:
a transmitting means that transmits user identification information to identify a user to the server and
a personal information acquiring means that acquires user's personal information from the first information code when online communication is impossible and transmits the user identification information contained in the second information code to the server and acquires personal information according to the user identification information from the server when online communication is possible, and
the server includes:
a storage means that stores the user's personal information for each piece of the user identification information;
an acquiring means that acquires the user identification information from the second information terminal; and
a providing means that provides the second information terminal with the user's personal information based on the user identification information.

12. A program executed by a first information terminal in a personal information providing system, the personal information providing system comprising the first information terminal, a second information terminal different from the first information terminal, and a server configured to communicate with the second information terminal, the personal information providing system providing personal information of a user of the first information terminal from the server to the second information terminal, wherein
the program causes the first information terminal to execute a function to present a first information code containing user's personal information when online communication is impossible and to present a second information code containing user identification information to identify a user when online communication is possible.

13. A program executed by a second information terminal in a personal information providing system, the personal information providing system comprising a first information terminal, the second information terminal different from the first information terminal, and a server configured to communicate with the second information terminal, the personal information providing system providing personal information of a user of the first information terminal from the server to the second information terminal, wherein
the first information terminal presents a first information code containing user's personal information when online communication is impossible and presents a second information code containing user identification information to identify a user when online communication is possible, and
the program causes the second information terminal to execute a function to acquire user's personal information from the first information code when online communication is impossible and to transmit the user identification information contained in the second information code to the server and acquire personal information according to the user identification information from the server when online communication is possible.

14. A program executed by a second information terminal in a personal information providing system, the personal information providing system comprising a first information terminal owned by a user and the second information terminal owned by a service provider, the personal information providing system providing the second information terminal with personal information of a user of the first information terminal, wherein
the first information terminal includes a storage means that stores a first information code containing a plurality of pieces of personal information of the user and a presentation means that presents an image of the single first information code,
the first information code has information cells with three or more colors, and
the program executes:
a function to display a screen for the user to set personal information permitted for provision and causes the user to set the personal information permitted for provision; and
a function to read an image of the single first information code presented by the first information terminal and acquire the personal information permitted by a user among the plurality of pieces of personal information contained in the single first information code.

15. A computer-readable recording medium that records the program according to any of claims 12 to 14.

16. A personal information providing method executed by a second information terminal using a first information terminal owned by a user and the second information terminal owned by a service provider to provide the second information terminal with personal information of a user of the first information terminal, wherein
the first information terminal stores a first information code containing a plurality of pieces of personal information of the user and presents an image of the single first information code,
the first information code has information cells with three or more colors, and
the second information terminal displays a screen for the user to set personal information permitted for provision, causes the user to set the personal information permitted for provision, and reads an image of the single first information code presented by the first information terminal, so as to acquire the personal information permitted by the user among the plurality of pieces of personal information contained in the single first information code.

17. A personal information providing method executed by a second information terminal using a first information terminal, the second information terminal different from the first information terminal, and a server configured to communicate with the second information terminal to provide personal information of a user of the first information terminal from the server to the second information terminal, wherein
the first information terminal presents a first information code containing user's personal information when online communication is impossible and presents a second information code containing user identification information to identify a user when online communication is possible,
the server stores user's personal information for each piece of the user identification information, acquires the user identification information from the first information terminal or the second information terminal, and provides the second information terminal with the user's personal information based on the user identification information, and
the second information terminal acquires user's personal information from the first information code when online communication is impossible and transmits the user identification information contained in the second information code to the server and acquires personal information according to the user identification information from the server when online communication is possible.
